Europäisches Patentamt

European Patent Office

Office européen des brevets

(11) Publication number: **0 334 543**
**A2**

## (12) EUROPEAN PATENT APPLICATION

(21) Application number: 89302547.8

(51) Int. Cl.⁴: **C04B 35/58**

(22) Date of filing: 15.03.89

(30) Priority: 23.03.88 JP 67313/88

(43) Date of publication of application:
27.09.89 Bulletin 89/39

(84) Designated Contracting States:
DE FR GB

(71) Applicant: NGK INSULATORS, LTD.
2-56, Suda-cho, Mizuho-ku
Nagoya City Aichi Pref.(JP)

(72) Inventor: Kobayashi, Kazuo
87 Takamine-Cho Showa-Ku
Nagoya City Aichi Pref.(JP)
Inventor: Hanzawa, Shigeru
36 NGK Kitakazoku Apartments 9,
Takeda-Cho 3-Chome
Mizuho-Ku, Nagoya City Aichi Pref.(JP)

(74) Representative: Paget, Hugh Charles Edward
et al
MEWBURN ELLIS & CO. 2/3 Cursitor Street
London EC4A 1BQ(GB)

(54) Method of producing high density silicon nitride sintered bodies.

(57) A high density silicon nitride sintered body is obtained by preliminarily sintering a shaped body comprised of silicon nitride powder of at least 90% α phase and $Y_2O_3$ and/or $Al_2O_3$ as sintering aid before hot isostatic pressing treatment using a glass capsule. The preliminary sintering is selected to achieve a silicon nitride β-phase forming ratio of 20-60%.

EP 0 334 543 A2

# METHOD OF PRODUCING HIGH DENSITY SILICON NITRIDE SINTERED BODIES

This invention relates to a method of producing a high density silicon nitride sintered body containing an oxide of yttrium and/or aluminum as a sintering aid.

Heretofore, there have been proposed various methods of producing high density silicon nitride sintered bodies. As a typical method, there is known a method wherein silicon nitride powder is added to a sintering aid and an organic binder, shaped by a press molding or the like, covered with glass and then subjected to a hot isostatic pressing from Japanese Patent Application Publication No. 59-35,870.

In the hot isostatic pressing method using a glass capsule as mentioned above, high density silicon nitride sintered bodies can be obtained in many cases, but when an oxide of yttrium and/or aluminum is used as a sintering aid, it becomes clear that the desired high densification cannot be achieved. That is, in the latter system, relatively large pores unfavorably remain in the sintered body after the hot isostatic pressing.

It is, therefore, an object of the invention to solve the aforementioned problem and to provide a method capable of producing high density silicon nitride sintered bodies in the system containing the oxide of yttrium and/or aluminum as a sintering aid.

According to the invention, there is the provision of a method of producing a high density silicon nitride sintered body, comprising shaping a mixture of silicon nitride powder containing not less than 90% of $\alpha$-phase and at least an oxide of yttrium and/or aluminum as a sintering aid, preliminarily sintering the resulting shaped body to obtain a presintered body having an adjusted $\beta$-phase forming ratio of silicon nitride of 20~60%, and then covering the presintered body with glass to conduct hot isostatic pressing.

The invention will be described with reference to the accompanying drawing, wherein:

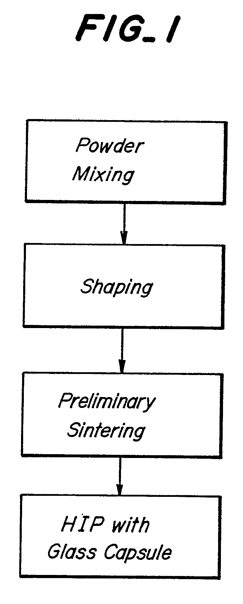

Fig. 1 is a flow chart showing an embodiment of practicing the method according to the invention.

In the invention, the shaped body is preliminarily sintered so as to adjust the $\beta$-phase forming ratio of $\alpha$-type silicon nitride to 20 ~ 60% before the hot isostatic pressing (hereinafter abbreviated as HIP) with the glass capsule, whereby high density silicon nitride sintered bodies can be obtained even in the system containing the oxide of yttrium and/or aluminum as a sintering aid. The reason why the $\beta$-phase forming ratio is limited to 20 ~ 60% is due to the fact that when the $\beta$-phase forming ratio is outside the above range, the maximum pore size remaining in the sintered body becomes larger and the densification is insufficient as seen from the following examples.

Moreover, the $\beta$-phase forming ratio defined in the invention is determined by the following equation:

$$\beta\text{-phase forming ratio (\%)} = (\beta2 - \beta1/\alpha + \beta1) \times 100$$

wherein $\alpha$ is an $\alpha$-phase quantity before the preliminary sintering, $\beta1$ is a $\beta$-phase quantity before the preliminary sintering and $\beta2$ is a $\beta$-phase quantity after the preliminary sintering.

The reason why the high density silicon nitride sintered body is obtained by limiting the $\beta$-phase forming ratio to a value lower than the conventional value before the HIP treatment with the glass capsule is considered due to the following. That is, the pores are existent in the silicon nitride sintered body, and needle crystal of $\beta$-type silicon nitride usually protrudes toward the inside of the pore. In this case, the needle crystal has substantially no defect and is approximately equal to the theoretical strength. Thus, in a structure in which the needle crystals of $\beta$-type silicon nitride extend towards the inside of the pores in the silicon nitride sintered body, i.e. a bridge structure, the pores cannot be broken even when external force is applied. Therefore, the pores included in the sintered body cannot be broken even when the high $\beta$-type silicon nitride sintered body is subjected to the HIP treatment.

An embodiment of the method according to the invention is shown by a flow chart in Fig. 1. At first, silicon nitride powder containing not less than 90% of $\alpha$-phase with a given particle size is mixed with a sintering aid such as $Y_2O_3$ and/or $Al_2O_3$ and an organic binder such as polyvinyl alcohol or the like, and then pressed in a mold to form a shaped body. Next, the shaped body is preliminarily sintered at 1200 ~ 2000 °C in an atmosphere of $N_2$ gas for 0.5~2 hours to adjust the $\beta$-phase forming ratio. The desirable $\beta$-phase forming ratio can be attained by changing the presintering temperature, the particle size of the starting material, and the kind and amount of the sintering aid. Finally, the preliminarily sintered body is covered with glass and then subjected to hot isostatic pressing, whereby the desirable high density silicon nitride sintered bodies are obtained.

The following examples are given in illustration of the invention and are not intended as limitations thereof.

Example

A starting powder of silicon nitride having an average particle size of 0.8 μm and containing not less than 90% of α-phase was mixed with $Y_2O_3$ and $Al_2O_3$ as a sintering aid in a mixing ratio as shown in the following Table 1 and then pressed in a mold into a size of 60×60×10 mm under a given pressure. This shaped body was preliminarily sintered in an $N_2$ gas atmosphere of an atmospheric pressure under conditions as shown in Table 1. After the preliminary sintering, the resulting presintered body was enveloped with a glass capsule and then subjected to hot isostatic pressing under conditions as shown in Table 1 to obtain sintered bodies of acceptable examples and comparative examples.

In each sample of the acceptable examples, and comparative examples, an area of 3×3 mm was polished into mirror state and observed by means of an optical microscope of 400 magnification to measure a maximum pore size. Moreover, the density of the sintered body in all of the acceptable examples and comparative examples was not less than 99% of theoretical. Further, the β-phase forming ratio after the preliminary sintering was measured with respect to the acceptable examples and comparative examples. The measured results are also shown in Table 1.

Table 1

| Run No. | Sintering aid (wt%) | | | Preliminary sintering conditions (°C × hr) | $\beta$-phase forming ratio in preliminarily sintered body (%) | HIP conditions with glass capsule (°C × MPa) × 1hr | Maximum pore size in sintered body ($\mu$m) | Remarks |
|---|---|---|---|---|---|---|---|---|
| | $Y_2O_3$ | $Al_2O_3$ | total | | | | | |
| 1 | 2.5 | 0 | 2.5 | 1700 × 1 | 20 | 1800 × 200 | 2.5 | Acceptable Example |
| 2 | 0 | 2.5 | 2.5 | 1650 × 1 | 35 | 1800 × 200 | 2.0 | |
| 3 | 2.5 | 2.5 | 5.0 | 1500 × 1 | 60 | 1700 × 200 | 1.5 | |
| 4 | 1.0 | 6.0 | 7.0 | 1400 × 2 | 30 | 1700 × 200 | 0.5 | |
| 5 | 6.0 | 6.0 | 12.0 | 1400 × 1 | 45 | 1700 × 50 | 1.0 | |
| 6 | 0 | 12.0 | 12.0 | 1200 × 3 | 35 | 1700 × 50 | 2.0 | |
| 7 | 7.0 | 5.0 | 12.0 | 1700 × 1 | 75 | 1700 × 50 | 7.0 | Comparative Example |
| 8 | 0 | 12.0 | 12.0 | 1500 × 1 | 65 | 1700 × 200 | 6.0 | |
| 9 | 1.0 | 6.0 | 7.0 | 1600 × 2 | 65 | 1700 × 200 | 6.5 | |
| 10 | 2.5 | 2.5 | 5.0 | 1200 × 3 | 15 | 1800 × 200 | 7.0 | |

EP 0 334 543 A2

As seen from the results of Table 1, the maximum pore size in the sintered body in the acceptable examples according to the invention is smaller than those of the comparative examples from which it is apparent that the sintered body according to the invention is highly densified at a more preferable state.

The invention is not intended to only the above example, and various changes and modifications are made possible. For instance, in the above example, only $Y_2O_3$ and/or $Al_2O_3$ are added as a sintering aid, but another sintering aid may be further added to obtain the same result.

As mentioned above, according to the method of the invention, the shaped body is preliminarily sintered before the HIP treatment with the glass capsule, so that high density silicon nitride sintered bodies can be obtained without the influence of needle-like $\beta$-type silicon nitride.


## Claims

1. A method of producing a high density silicon nitride sintered body, comprising shaping a mixture of silicon nitride powder containing not less than 90% of $\alpha$-phase and at least an oxide of yttrium and/or aluminum as a sintering aid, preliminarily sintering the resulting shaped body to obtain a presintered body having an adjusted $\beta$-phase forming ratio of silicon nitride of 20~60%, and then covering the presintered body with glass to conduct hot isostatic pressing.

2. The method according to claim 1, wherein said sintering aid is $Y_2O_3$ and/or $Al_2O_3$.

# FIG_ I

```
┌─────────────┐
│   Powder    │
│   Mixing    │
└─────────────┘
       │
       ▼
┌─────────────┐
│   Shaping   │
└─────────────┘
       │
       ▼
┌─────────────┐
│ Preliminary │
│  Sintering  │
└─────────────┘
       │
       ▼
┌─────────────┐
│  HIP with   │
│Glass Capsule│
└─────────────┘
```